# EUROPÄISCHE PATENTSCHRIFT

(11) **EP 3 166 953 B1**
(45) Veröffentlichungstag und Bekanntmachung des Hinweises auf die Patenterteilung: **20.02.2019**
(21) Anmeldenummer: 15738867.9
(22) Anmeldetag: 03.07.2015
(51) Int. Cl.: C07F 15/00

(54) **VERFAHREN ZUR HERSTELLUNG VON HYDRIDOCARBONYLTRIS(TRIPHENYLPHOSPHIN)RHODIUM(I)**
PROCESS FOR PREPARING HYDRIDOCARBONYLTRIS(TRIPHENYLPHOSPHINE)RHODIUM(I)
PROCÉDÉ DE PRÉPARATION D'UN HYDRIDOCARBONYLTRIS(TRIPHÉNYLPHOSPHINE)RHODIUM (I)

(30) Priorität: 11.07.2014 DE 102014109763
(43) Veröffentlichungstag der Anmeldung: 17.05.2017
(73) Patentinhaber: Umicore AG & Co. KG, 63457 Hanau-Wolfgang (DE)
(72) Erfinder: DOPPIU, Angelino, 63500 Seligenstadt (DE); KARCH, Ralf, 63801 Kleinostheim (DE); RIVAS-NASS, Andreas, 64625 Bensheim (DE); WOERNER, Eileen, 61130 Nidderau (DE)
(74) Vertreter: Clauswitz, Kai-Uwe Wolfram
(86) Internationale Anmeldenummer: PCT/EP2015/065200
(87) Internationale Veröffentlichungsnummer: WO 2016/005282

(56) Entgegenhaltungen:
- US-A- 3 644 446
- N Ahmad ET AL: "Hydrido Phosphine Complexes of Rhodium(1) 19. HYDRIDO PHOSPHINE COMPLEXES OF RHODIUM(1)", Inorganic Syntheses, 1. Januar 1990 (1990-01-01), XP055211522, Gefunden im Internet: URL:http://onlinelibrary.wiley.com/store/1 0.1002/9780470132593.ch19/asset/ch19.pdf?v =1&t=ie9oyfbs&s=9316d741d957c11df80002cc14 8cd22a91743097 [gefunden am 2015-09-07] in der Anmeldung erwähnt
- Sam J La Placa ET AL: "Crystal and Molecular Structure of Tristriphenylphosphine Rhodium Carbonyl Hydride", , 1. Januar 1965 (1965-01-01), Seiten 511-519, XP055211463, Gefunden im Internet: URL:http://journals.iucr.org/q/issues/1965 /03/00/a04555/a04555.pdf [gefunden am 2015-09-07]

## Beschreibung

### Einleitung

Gegenstand der Erfindung ist ein Verfahren zur Herstellung von Hydridocarbonyl-tris(triphenylphosphin)rhodium(I), RhH(CO)(PPh₃)₃, nachfolgend auch als "Rh-Hydrido" bezeichnet. Dabei wird "Ph" im Folgenden als Abkürzung für die Phenylgruppe verwendet.

Das Verfahren zeichnet sich durch eine verbesserte, einstufige Verfahrensdurchführung aus, die auf etwaige Zwischenisolierungs- oder Zwischenreinigungsstufen verzichtet. Es handelt sich daher um eine sogenannte Eintopfsynthese. In der vorliegenden Anmeldung wird ein Verfahren, das gegebenenfalls mehrere Verfahrensschritte umfasst, jedoch in einem einzigen Behältnis ohne Zwischenisolierungsschritte durchgeführt wird, auch als "einstufig" bezeichnet, was im Sinne der oben beschriebenen Eintopfsynthese zu verstehen ist.

Das einstufige Verfahren ermöglicht die Herstellung von Rh-Hydrido in hohen Ausbeuten und sehr guter Qualität: Der Chloridgehalt des mit Hilfe des Verfahrens hergestellten Rh-Hydrido liegt unter 500 ppm (bezogen auf das Produkt); die Ausbeute beträgt über 99 %. Des Weiteren ist die Raumausbeute bei Herstellung von Rh-Hydrido nach dem hier vorgestellten Verfahren deutlich höher als bei Herstellung nach den im Stand der Technik bekannten Verfahren. Durch diese hohe Raumausbeute ist das Verfahren im industriellen Maßstab wirtschaftlich durchführbar. Unter Raumausbeute versteht man die pro Volumeneinheit in einem Reaktor gebildete Produktmenge.

Das hergestellte Rh-Hydrido ist besonders geeignet als Katalysator für die Homogenkatalyse, wie beispielsweise für Hydroformylierungsreaktionen.

### Stand der Technik

Im Stand der Technik sind einige ein- und mehrstufige Verfahren zur Herstellung von RhH(CO)(PPh₃)₃ gekannt. Die verschiedenen bekannten Synthesen sind nachfolgend schematisch dargestellt:

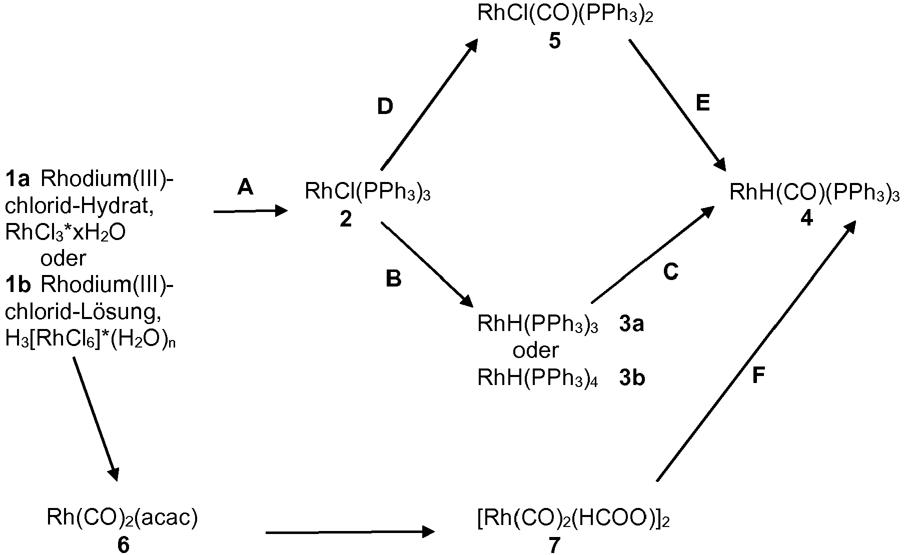

Die WO 2005/005448 A1 beschreibt ein Verfahren zur Herstellung von Chlorotris(triphenylphosphin)rhodium(I) **(2)** durch Umsetzung von Rh(III)-chlorid-Lösung (**1a** und **1b**) mit Triphenylphosphin. RhCl(PPh₃)₃ ist dem Fachmann unter dem Namen "Wilkinson-Katalysator" bekannt. Gemäß WO 2005/005448 A1 beeinflusst die Temperaturführung bei der Reaktion die Qualität des Produkts **(2)** direkt und reproduzierbar. Die Reaktionslösung muss langsam erhitzt werden, da sich sonst sehr kleine, kaum filtrierbare Kristalle des Wilkinson-Katalysators bilden. Das in der WO 2005/005448 A1 offenbarte Verfahren liefert Chlorotris(triphenylphosphin)rhodium(I) **(2)** in Form großer Kristalle.

Auf diese Weise gebildetes RhCl(PPh₃)₃ **(2)** ist für die Synthese von Hydridocarbonyltris(triphenylphosphin)rhodium(I) **(4)** über die Zwischenstufe 5 oder 3 nur bedingt geeignet: Die großen Kristalle sind schwer löslich, dass man keine vollständige Umsetzung zum Zwischenprodukt und zum Produkt erzielen kann. Man erhält dabei ein Gemisch aus Edukt **(2),** Zwischenprodukte (**5** bzw. **3**) und Produkt **(4).** Daher müssen stark verdünnte Lösungen von **(2)** eingesetzt werden. Die Raumausbeute des Produktes **(4)** ist gering.

Die Herstellung von Carbonylchlorobis(triphenylphosphin)rhodium(I) **(5)** aus Rhodium(III)-chlorid-Hydrat **(1a)** ist in D Evans, JA Osborn, G Wilkinson, "trans-Carbonylchlorobis(triphenylphosphine)rhodium and related Complexes", Inorg Synth 1990, 28, 79-80, offenbart. Eine ethanolische Lösung von RhCl₃*3H₂O **(1a)** wird dabei mit einem Überschuss an PPh₃ versetzt, anschließend wird schnell wässriger Formaldehyd zugegeben. Die Ausbeute (85%) und Raumausbeute (ca. 12 g/L) an RhCl(CO)(PPh₃)₂ **(5)** sind niedrig, und das Reaktionsprodukt ist sehr schlecht löslich.

Eine Eintopfreaktion zur Herstellung von Hydridocarbonyltris(triphenylphosphin)-rhodium(I), RhH(CO)(PPh₃)₃ **(4)** aus Rhodium(III)-chlorid-Hydrat, RhCl₃*3H₂O **(1a)** ist in N Ahmad, SD Robinson, MZ Uttley, "Transition-metal Complexes Containing Phosphorus Ligands. Part VII. New and Improved Syntheses for Some Triphenylphosphine Complexes of Rhodium, Iridium, Ruthenium, and Osmium", J Chem Soc Dalton Trans 1972, 843-847 und in N Ahmad, JJ Levison, SD Robinson, MF Uttley, "Hydrido Phosphine Complexes of Rhodium", Inorganic Synth 1990, 28, 81-83, offenbart. Eine ethanolische Lösung von Rhodium(III)-chlorid-Hydrat, RhCl₃*3H₂O wird mit einem großen molaren Überschuss von Triphenylphosphin, wässriger Formaldehydlösung und ethanolischer KOH versetzt und ergibt RhH(CO)(PPh₃)₃. Als Zwischenstufe bildet sich RhCl(CO)(PPh₃)₃ **(5).** Nachteilig bei dieser Eintopfreaktion ist, dass sie für den industriellen Maßstab nicht geeignet ist: Die Konzentrationen der eingesetzten Substanzen müssen niedrig sein, da sonst keine vollständige Umsetzung der Zwischenstufe RhCl(CO)(PPh₃)₃ **(5)** erfolgt und das Produkt zu viel Cl enthält. Ein zu hoher Chlorgehalt wirkt sich nachteilig auf die katalytischen Eigenschaften des Endprodukts RhH(CO)(PPh₃)₃ **(4)** aus. Außerdem müssen die Reagenzien schnell hintereinander zugegeben werden, um die Bildung von Nebenprodukten zu vermeiden. Bei großindustriellen Produktionsanlagen ist eine derart schnelle Zugabe von Reagenzien jedoch nicht möglich, so dass dieses Verfahren für den industriellen Maßstab nicht geeignet ist. Hinzu kommt, dass die Raumausbeute niedrig ist (ca. 6 g/L), was das Verfahren unwirtschaftlich macht.

In N Ahmad, SD Robinson, MZ Uttley, "Transition-metal Complexes Containing Phosphorus Ligands. Part VII. New and Improved Syntheses for Some Triphenylphosphine Complexes of Rhodium, Iridium, Ruthenium, and Osmium", J Chem Soc Dalton Trans 1972, 843-847 und in N Ahmad, JJ Levison, SD Robinson, MF Uttley, "Hydrido Phosphine Complexes of Rhodium", Inorganic Syntheses Vol. 28, 1990, 81-83, ist des Weiteren ein Verfahren zur Herstellung von Hydridotetrakis(triphenylphosphin)rhodium(I) **(3b)** offenbart, bei dem Rhodium-chlorid-Hydrat, RhCl₃*3H₂O **(1a)** mit Triphenylphosphin in ethanolischer KOH umgesetzt wird. Auch hier müssen die Komponenten schnell zugegeben werden, und die Raumausbeute ist niedrig (ca. 9 g/L), so dass dieses Verfahren für den industriellen Maßstab nicht geeignet ist.

In JJ Levison, SD Robinson, "Transition-metal Complexes containing Phosphorus Ligands. Part III. Convenient Syntheses of Some Triphenylphosphine Complexes of the Platinum Metals", J Chem Soc A 1970, 2947-2954 werden Verfahren zur Herstellung von Hydridotetrakis(triphenylphosphin)rhodium(I) **(3b)** sowie von Hydridocarbonyltris(triphenylphosphin)rhodium(I) **(4)** offenbart. Edukt ist in beiden Fällen Rhodium(III)-chlorid-Hydrat, RhCl₃*3H₂O **(1a).** Die Umsetzung von RhCl₃*3H₂O mit PPh₃ und NaBH₄ in Ethanol führt zu RhH(PPh₃)₄. Fügt man zu RhCl₃*3H₂O neben PPh₃, NaBH₄ und Ethanol noch wässriges Formaldehyd hinzu, so erhält man RhH(CO)(PPh₃)₃ **(4).** Bei beiden Verfahren müssen die Reaktanden schnell zugegeben werden und die Raumausbeuten sind niedrig (ca. 6 g/L), weshalb sie für den industriellen Maßstab ungeeignet sind.

In KC Dewhirst, W Keim, CA Reilly, "The Preparation and Nuclear Magnetic Resonance Spectra of Hydridophosphine Complexes of Ruthenium and Rhodium", Inorg Chem 1968, 7, 546-551 ist die mehrstufige Synthese von RhH(CO)(PPh₃)₃ **(4)** beschrieben. In der ersten Stufe wird der Wilkinson-Katalysator **(2)** zu einem Hydrido(triphenylphosphin)rhodium **(3a)** oder **(3b)** umgesetzt. In der zweiten Stufe wird daraus der Carbonylkomplex RhH(CO)(PPh₃)₃ hergestellt. Die Reaktion von RhCl(PPh₃)₃ **(2)** mit Aluminiumtriisopropyl in Diethylether und n-Hexan ergibt RhH(PPh₃)₃ **(3a).** Setzt man dieses Reaktionsprodukt **(3a)** mit PPh₃ in Toluol um, so erhält man RhH(PPh₃)₄ **(3b).** Die Reaktion von RhCl(PPh₃)₃ **(2)** mit PPh₃ und Hydrazin in einem Benzol-Ethanol-Gemisch führt ebenfalls zu RhH(PPh₃)₄ **(3b).** Anschließendes Umsetzen von **(3a)** mit Kohlenmonoxid in Ethanol oder von **(3b)** mit Kohlenmonoxid in Benzol führt zu RhH(CO)(PPh₃)₃ **(4).** Nachteilig bei den von Dewhirst et al. beschriebenen Verfahren ist, dass es kein Eintopfverfahren ist. Die extrem luftempfindliche Zwischenprodukte RhH(PPh₃)₃₋₄ **(3a)** bzw. **(3b)** müssen isoliert werden. Zudem kommen hochentzündliche bzw. sehr giftige Lösungsmittel oder Reagenzien wie Diethylether, Toluol, Benzol, Aluminiumtriisopropyl und Hydrazin zum Einsatz. Die Produktausbeute ist recht niedrig (ca. 50%).

Die EP 0 055 487 B1 offenbart ein Verfahren zur Herstellung einer Halocarbonylbis(triorganophosphor)-Rh-Verbindung, bei der es sich beispielsweise um RhCl(CO)(PPh₃)₂ **(5)** handeln kann. Dabei wird eine Lösung bestehend aus a) einem Rhodiumkomplexkonzentrat, b) einer Quelle für Halogenidionen, c) CO-Gas oder einer CO-Quelle und d) freiem Triorganophosphorliganden, beispielsweise PPh₃, umgesetzt. Bei dem Rhodiumkomplexkonzentrat handelt es sich um ein verbrauchtes, Rhodium enthaltendes Hydroformylierungs-Reaktionsmediums. Vor Durchführung des Verfahrens muss das Hydroformylierungs-Reaktionsmedium aufkonzentriert werden. Optional kann die erhaltene Halocarbonylbis(triorganophosphor)-Rh-Verbindung anschließend in einem Eintopfverfahren mit einem Metallhydrid und einem Triorganophosphorliganden umgesetzt werden. Bei dem Metallhydrid handelt es sich vorteilhaft um ein Borhydrid und bei dem Triorganophosphorliganden um PPh₃. Nach Umsetzung mit Metallhydrid und Triorganophosphorligand erhält man eine Hydridocarbonyltris(triorganophosphor)-Rh(I)-Verbindung, beispielsweise RhH(CO)(PPh₃)₃ **(4).**

Die EP 0 083 094 B1 beschreibt ein einstufiges Verfahren zur Herstellung einer Hydrido-carbonyl-tris(triorganophosphor)-Rh-Verbindung, bei der es sich beispielsweise um RhCl(CO)(PPh₃)₃ **(5)** handeln kann. Dabei wird eine Lösung bestehend aus a) einem Rhodiumkomplexkonzentrat, b) Wasserstoffgas oder einer Wasserstoffquelle in Form eines Alkali- und/oder Erdalkalihydroxids, c) einem Alkohol mit 1 bis 10 Kohlenstoffatomen, d) CO-Gas oder einer CO-Quelle und e) freiem Triorganophosphorliganden, beispielsweise PPh₃, umgesetzt. Bei dem Rhodiumkomplexkonzentrat handelt es sich um ein verbrauchtes, Rhodium enthaltendes Hydroformylierungs-Reaktionsmediums. Vor Durchführung des Verfahrens muss das Hydroformylierungs-Reaktionsmedium aufkonzentriert werden. Das Produkt in den Beispielen wird als grün-gelbe Suspension beschrieben, was auf ein stark verunreinigtes Produkt hinweist. Weiter von Nachteil sind die mäßigen bis schlechten Ausbeuten von 13% bis 75%, bezogen auf das Edelmetall.

US 3644446 beschreibt ein Verfahren, in welchem Rhodium in einem flüssigen Reaktionsmedium mit einem Alkalimetallhydroxid oder Alkalimetallalkoholat, einem Reduktionsmittel wie Wasserstoff oder Kohlenmonoxid und einem Alkohol in Gegenwart eines Liganden gemischt und bei 0°C bis 150°C zur Reaktion gebracht wird.

Die Schmelzpunkte der Reaktionsprodukte, die stark vom tatsächlichen Schmelzpunkt des RhCl(CO)(PPh₃)₃ abweichen, weisen auf ein stark verunreinigtes Produkt hin und es müssen im Vergleich zu den Edukten große Mengen an Lösemitteln verwendet werden. Eine besondere Reihenfolge der Zugabe oder ein besonderes Temperaturprofil für die Reaktion ist nicht beschrieben.

Sowohl bei EP 0 055 487 B1, US 3644446 als auch bei EP 0 083 094 B1 sind die Raumausbeuten vergleichsweise niedrig.

Die Herstellung von Acetylacetonato-dicarbonyl-rhodium(I) **(6)** aus Rhodiumchloridtrihydrat **(1a)** wurde in JG Leipoldt, SS Basson, LDC Bok, TLA Gerber, "The Crystal Structure of Acetylacetonatocarbonyltriphenylphosphanerhodium (I)", Inorg Chim Acta 1978, 26, L35-L37, beschrieben. Im ersten Schritt wurde dabei eine Lösung von [Rh₂Cl₂(CO)₄] hergestellt, indem eine Lösung von Rhodium(III)-chlorid-Hydrat, RhCl₃*3H₂O in Dimethylformamid zum Rückfluss erhitzt wurde. Im zweiten Schritt wurde Acetylaceton zugegeben, wodurch sich Rh(CO)₂(acac) **(6)** bildete. Dabei steht "acac" für die Acetylacetonatogruppe.

In YS Varshavskii, TG Cherkasova, IS Podkorytov, AA Korlyukov, VN Khrustalev and AB Nikol'skii: "Rh(I) Carbonyl Carboxylato Complexes: Spectral and Structural Characteristics. Some Reactions of Coordinated Formate Group", Russ J Coord Chem 2005, 31, 121-131 ist die Herstellung von Hydridocarbonyltris(triphenylphosphin)rhodium(I) **(4)** aus Dicarbonyl(acetylacetonato)rhodium (I) **(6)** offenbart. Im ersten Schritt wird Rh(CO)₂(acac) **(6)** in Diethylether mit wasserfreier Ameisensäure zu [Rh(CO)₂(HCOO)]₂ **(7)** umgesetzt. Im zweiten separaten Schritt wird der Formatkomplex **(7)** mit Triphenylphosphin PPh₃ im Verhältnis 1:10 (mol/mol) in 2-Propanol zu RhH(CO)(PPh₃)₃ **(4)** umgesetzt. Diese Synthese ist für großtechnische Anwendungen schlecht geeignet, da im ersten Schritt der hochentzündliche Diethylether eingesetzt wird und im zweiten Schritt ein großer Überschuss an PPh₃ benötigt wird. Zudem handelt es sich um eine aufwändige Mehrstufensynthese.

Die bisher bekannten Verfahren zur Herstellung von Hydridocarbonyltris(triphenylphosphin)rhodium(I) weisen zahlreiche Nachteile auf: Einige Verfahren sind mehrstufig und erfordern die aufwändige Isolierung von Zwischenprodukten. Andere Verfahren sind zwar einstufig, aber wegen der erforderlichen schnellen Zugabe der Reaktanden nicht im industriellen Maßstab einsetzbar, da in großtechnischen Anlagen die Geschwindigkeit, mit der Substanzen zugegeben können, begrenzt ist. Allen bekannten Verfahren ist gemein, dass die Raumausbeute, d.h. die Masse an Produkt pro Volumeneinheit des Lösungsmittels, relativ niedrig ist, so dass große Mengen an Lösungsmitteln eingesetzt und wieder entfernt werden müssen.

Sam La Placa et al., "Crystal and Molecular Structure of Tristriphenylphosphine Rhodium Carbonyl Hydride", Acta Cryst. 18, (1965), 511-519 offenbart Hydridocarbonyl-tris(triphenylphosphin)rhodium (I). Die dort zitierte Schrift Bath, S.S. Vaska, L., J. Amer. Chem. Soc. 86, (1964), 3500 zeigt die Herstellung von RhH(CO)(PPh₃)₃ durch Einwirkung von einem Überschuss von Hydrazin auf [RhCl(CO)(PPh₃)₂].

Aufgabe der vorliegenden Erfindung ist es daher, die Nachteile des Standes der Technik bei der Herstellung von RhHCO(PPh₃)₃ zu überwinden und ein Verfahren bereitzustellen, das sowohl einstufig verläuft als auch in industriellem Maßstab mit signifikant verbesserter Raumausbeute durchführbar ist.

Diese Aufgabe wird gelöst durch ein einstufiges Verfahren zur Herstellung von RhH(CO)(PPh₃)₃ umfassend die Schritte
a) Herstellen einer alkoholischen Suspension von Triphenylphosphin PPh₃ in einem inertisierten Reaktionsgefäß,
b) Mischen der alkoholischen PPh₃-Suspension mit einem Rh(III)-chlorid-Precursor bei einer Temperatur von 30 bis 40 °C,
c) Rühren des Reaktionsgemisch aus PPh₃-Suspension und Rh(III)-chlorid-Precursor bei erhöhter Temperatur, in einer Ausführungsform bei 1,5 bis 3 Stunden,
   - wobei unter Rückfluss gerührt wird, falls der Siedepunkt des Alkohols unter 85°C liegt, oder
   - wobei bei einer Innentemperatur des Reaktionsgefäßes von 75°C bis 85°C gerührt wird, falls der Siedepunkt des Alkohols 85°C oder mehr beträgt,
d) Abkühlen der Suspension aus Schritt c) auf 35-50°C, insbesondere 40-50°C,
e) Zugabe einer alkoholischen Alkalihydroxidlösung
f) Rühren der Reaktionssuspension bei 35-50°C, insbesondere 40-50°C, wobei eine Zeitdauer von für 1,5 bis 3 Stunden meist ausreichend ist,
g) Begasung mit CO-Gas, meist für eine Zeit von 2 bis 16 Stunden,
h) Abtrennen und gegebenenfalls Waschen und Trocknen des Hydridocarbonyltris(triphenylphosphin)rhodium(I)-Komplexes.

Die Lösung der Aufgabe umfasst die Bereitstellung eines einstufigen Verfahrens zur Herstellung von Hydridocarbonyltris(triphenylphosphin)rhodium(I). Aufgrund der eingesetzten Chemikalien, der Verfahrensführung, der hohen Produktqualität und der erzielbaren hohen Ausbeuten sowie Raumausbeute ist das Verfahren umweltfreundlich und wirtschaftlich.

Ein einstufiges Verfahren im Sinne der vorliegenden Erfindung umfasst die Herstellung von Hydridocarbonyltris(triphenylphosphin)rhodium(I) ohne jegliche Isolierung von Zwischenprodukten. Die vorliegende Erfindung beschreibt daher ein Verfahren, in dem das Zielprodukt ohne kosten- und zeitintensive Zwischenisolierungen oder Zwischenreinigungen in situ in einem einzigen Reaktor aus den Ausgangsstoffen hergestellt wird. Diese in situ-Herstellung in einem einzigen Reaktor ohne Zwischenisolierungen oder Zwischenreinigungen wird nachfolgend als "Eintopfsynthese" bezeichnet.

Das Verfahren ermöglicht eine einfache Isolierung des Hydridocarbonyltris(triphenylphosphin)rhodium(I), da gezielt Verfahrensbedingungen gewählt werden, in denen die Zielverbindung direkt aus dem Reaktionsgemisch ausfällt. Das Verfahren umfasst also die Bildung einer Suspension, welche die abtrennbare Verbindung als Niederschlag enthält. Somit ist keine zeit- und kostenaufwändige Isolierung beispielsweise durch Abtrennung, Aufkonzentrieren oder durch andere Prozesse erforderlich.

Das Verfahren zur Herstellung von Hydridocarbonyltris(triphenylphosphin)rhodium(I) ist nachfolgend erläutert, wobei die Erfindung alle nachfolgend aufgeführten Ausführungsformen einzeln und in Kombination miteinander umfasst.

In Schritt a) des hier beschriebenen Verfahrens wird eine alkoholische Suspension von Triphenylphosphin PPh₃ hergestellt. Für die Herstellung der Suspension werden primäre und sekundäre Alkohole mit einem bis fünf Kohlenstoffatomen verwendet. Dabei kann es sich um einen oder mehrere primäre Alkohole, einen oder mehrere sekundäre Alkohole oder Gemische aus mindestens einem primären und mindestens einem sekundären Alkohol handeln.

Der Alkohol ist dabei ausgewählt aus Methanol, Ethanol, n-Propanol, 2-Propanol, n-Butanol, 2-Methyl-1-propanol (Isobutanol), 2-Butanol, 1-Pentanol, 2-Pentanol, 3-Pentanol, 2-Methyl-1-butanol, 3-Methyl-1-butanol, 3-Methyl-2-butanol, 2,2-Dimethyl-1-propanol und Gemischen dieser Alkohole. Nachfolgend werden die zur Herstellung der Suspension von Triphenylphosphin verwendeten Alkohole als "der Alkohol" bezeichnet. Dabei kann "der Alkohol" für einen einzigen Alkohol oder für ein Gemisch mehrerer Alkohole stehen.

In einer spezifischen Ausführungsform ist der Alkohol ausgewählt aus Methanol, Ethanol, n-Propanol und 2-Propanol und Gemischen aus mindestens zweien dieser Alkohole. Gut geeignet ist Ethanol.

Das Reaktionsgefäß wird vor dem Befüllen mit Alkohol inertisiert. Unter "Inertisieren" wird dabei das Verdrängen des im Gefäß befindlichen Sauerstoffs mit einem Inertgas wie beispielsweise Argon oder Stickstoff verstanden. Vorteilhaft enthält das Gemisch aus PPh₃ und Alkohol 100 bis 250 g PPh₃ pro Liter Alkohol, insbesondere 150 bis 220 g PPh₃ pro Liter.

Der Alkohol wird im inertisierten Reaktionsgefäß vorgelegt, dann wird PPh₃ zugegeben und das Alkohol-PPh₃-Gemisch erhitzt. Liegt der Siedepunkt des Alkohols unter 85°C, so wird bis zu dessen Siedepunkt erhitzt. Bei Alkoholen, deren Siedepunkt größer oder gleich 85°C beträgt, wird auf eine Innentemperatur des Reaktionsgefäßes von 75°C bis 85°C erhitzt. Die Siedepunkte der oben genannten Alkohole sind dem Fachmann bekannt.

Nach Erreichen dieser Temperatur wird für 15 bis 60 min, vorteilhaft für 30 min, am Rückfluss gerührt, falls bis zuvor bis zum Siedepunkt des Alkohols erhitzt wurde. Falls der Siedepunkt des verwendeten Alkohols höher als 85°C liegt, wird nach Erreichen einer Innentemperatur des Reaktionsgefäßes von 75 bis 85°C für 15 bis 60 min, vorteilhaft für 30 min, bei dieser Temperatur gerührt. In Abhängigkeit von den eingesetzten Menge PPh₃ pro Liter Alkohol und von der Art des Alkohols löst sich PPh₃ ganz oder überwiegend im Alkohol. Anschließend wird die Reaktionsmischung auf eine Innentemperatur Tᵢₙₙₑₙ von 30°C bis 40°C, vorteilhaft auf 35°C, abgekühlt. Dabei können Teile des PPh₃ als feines Pulver wieder ausfallen. Nach dem Abkühlen der Reaktionsmischung auf 30°C bis 40°C erhält man eine PPh₃-Suspension.

Eine Dispersion bezeichnet im Einklang mit dem Lehrbuchwissen eine Mischung von mindestens zwei nicht miteinander mischbaren Phasen, wobei eine der wenigstens zwei Phasen flüssig ist. In Abhängigkeit vom Aggregatzustand der zweiten bzw. weiteren Phase werden Dispersionen in Aerosole, Emulsionen und Suspensionen unterteilt, wobei die zweite oder weitere Phase bei Aerosolen gasförmig, bei Emulsionen flüssig und bei Suspensionen fest ist. Im Verfahren erhält man nach dem Abkühlen der Reaktionsmischung auf 30 bis 40°C eine PPh₃-Suspension.

In Schritt b) des Verfahrens wird die alkoholische PPh₃-Suspension mit einem Rh(III)-chlorid-Precursor gemischt. Der Rh(III)-chlorid-Precursor ist ausgewählt aus Rhodium(III)-chlorid-Hydrat RhCl₃*xH₂O und Rhodium(III)-chlorid-Lösung H₃[RhCl₆]*(H₂O)ₙ, wässrigen und alkoholischen Lösungen von RhCl₃*xH₂O und H₃[RhCl₆]*(H₂O)ₙ sowie Gemischen davon. Dabei wird der Begriff "Alkohol" gemäß der für die PPh₃-Suspension genannten Definition verwendet. Der Begriff "wässrige und alkoholische Lösungen von RhCl₃*xH₂O und H₃[RhCl₆]*(H₂O)ₙ sowie Gemische davon" umfasst dabei Folgendes:
a) wässrige Lösungen, die eine oder beide der Substanzen RhCl₃*xH₂O und H₃[RhCl₆]*(H₂O)ₙ umfassen,
b) alkoholische Lösungen, die eine oder beide der Substanzen RhCl₃*xH₂O und H₃[RhCl₆]*(H₂O)ₙ umfassen,
c) Lösungen, die Wasser und Alkohol und eine oder beide der Substanzen RhCl₃*xH₂O und H₃[RhCl₆]*(H₂O)ₙ umfassen.

In einer spezifischen Ausführungsform wird eine Lösung wie unter b) definiert eingesetzt.

In einer weiteren spezifischen Ausführungsform wird eine Lösung wie unter c) definiert eingesetzt.

Handelt es sich um Alkohol umfassende Lösungen gemäß b) oder c), so kann ein einziger Alkohol oder ein Gemisch aus mindestens zwei Alkoholen vorliegen. In einer weiteren Ausführungsform wird der Alkohol ausgewählt aus Methanol, Ethanol, n-Propanol und 2-Propanol und Gemischen davon. Gut geeignet ist Ethanol.

Dem Fachmann ist bekannt, dass es sich bei Rh(III)-chlorid-Hydrat und Rh(III)-chlorid-Lösung nicht um definierte Verbindungen mit exakter stöchiometrischer Zusammensetzung handelt. Die Formeln RhCl₃*xH₂O und H₃[RhCl₆]*(H₂O)ₙ stellen somit idealisierte Zusammensetzungen dar. Je nach Halogenid- und Wassergehalt der Verbindungen ändern sich die vorliegenden Komplexverbindungen. Rhodium(III)-chlorid-Hydrat und dessen kommerziell erhältliche wässrige Lösung liegen normalerweise als gemischte Chloro-/Aquo-Komplexe vor, weshalb der Wassergehalt in der idealisierten Formel mit "xH₂O" angegeben wird. Bedingt durch den Herstellungsprozesses von Rhodium(III)-chlorid-hydrat und Rhodium(III)-chlorid-Lösung sind mehr oder weniger Aquo- beziehungsweise Chloridliganden an den Rhodium(III)-Komplex gebunden. Dies hängt bei der Herstellung eines Feststoffs von Rh(III)-chlorid-hydrat vom Grad des Eindampfens und bei Herstellung einer Lösung von Säuregehalt (HCl) und Konzentration eben dieser Lösung ab.

Die einzusetzenden Rh(III)-chlorid-Precursoren Rhodium(III)-chlorid-Hydrat RhCl₃*xH₂O und Rhodium(III)-chlorid-Lösung H₃[RhCl₆]*(H₂O)ₙ sind kommerziell erhältlich. Generell sind für das Verfahren alle Rhodium(III)-chlorid-Hydrate und -Lösungen einsetzbar, und zwar unabhängig von ihrem jeweiligen Wasser- bzw. Chloridgehalt (Rh/Cl-Verhältnis), sofern diese Rhodiumchloridhydrate vollständig in Alkohol, Wasser oder Gemischen davon löslich sind.

In einer vorteilhaften Ausführungsform wird der Rh(III)-chlorid-Precursor ausgewählt aus einem Rhodium(III)-chlorid-Hydrat mit einem Rhodiumgehalt von maximal 40% und Rhodium(III)-chlorid-Lösungen mit einem Rhodium-Gehalt von ca. 20% und einem Chlor/Rhodium-Verhältnis von 4:1 bis 6:1.

In einer weiteren spezifischen Ausführungsform handelt es sich bei dem Rh(III)-chlorid-Precursor um RhCl₃*3H₂O. Diese Verbindung wird nachfolgend auch als "Rhodium(III)-chlorid-Hydrat" bezeichnet.

In einer weiteren spezifischen Ausführungsform handelt es sich bei dem Rh(III)-chlorid-Precursor um H₃[RhCl₆]*n(H₂O), das nachfolgend als "Rhodium(III)-chlorid-Lösung" bezeichnet wird. Typischerweise werden wasserhaltige Rhodium(III)-chlorid-Lösungen mit einem Rhodiumgehalt < 30 Gew.-% verwendet, wie sie handelsüblich sind und beispielsweise durch Lösen von Rhodiummetall in Gegenwart von konzentrierter Salzsäure und Chlorgas hergestellt werden. Geeignete Rhodium(III)-chlorid-Lösungen können aber auch aus Prozessströmen des Edelmetallrecyclings oder der industriellen Edelmetallchemie abgezweigt werden. Darüber hinaus hat die Verwendung einer Rhodium(III)-chlorid-Lösung gegenüber dem üblicherweise verwendeten festen Rhodium(III)-chlorid-Hydrat den Vorteil einer kostengünstigeren und schnelleren Verarbeitung, da ein vorgelagertes Eindampfen, Isolieren zu Rhodium(III)-chlorid-Hydrat und Analysieren zur Bestimmung der Ausgangsmenge entfällt.

In einer vorteilhaften Ausführungsform der vorliegenden Erfindung erfolgt das Mischen der alkoholischen PPh₃-Suspension mit einem Rh(III)-Precursor gemäß Schritt b) des Verfahrens, ohne dass der Rh(III)-Precursor zuvor mit einem Lösungsmittel gemischt wird. Die einzusetzenden Rh(III)-Precusoren mit den idealisierten Zusammensetzungen RhCl₃*xH₂O und H₃[RhCl₆]*(H₂O)ₙ weisen zwar selbst bereits einen gewissen Wassergehalt auf, doch in der hier genannten Ausführungsform wird diesem Wasser kein weiteres Lösungsmittel hinzugefügt, bevor das Mischen mit der PPh₃-Suspension erfolgt.

In einer weiteren Ausführungsform wird der Rh(III)-Precursor in ein Lösungsmittel eingebracht, bevor er gemäß Schritt b) des Verfahrens mit der PPh₃-Suspension gemischt wird. Bei dem Lösungsmittel handelt es sich um Wasser, einen Alkohol oder Gemische davon gemäß obiger Definition. Handelt es sich bei dem Rh(III)-Precursor um Rhodium(III)chlorid-Lösung, so wird der Precursor in einer spezifischen Ausführungsform mit einem Alkohol gemischt.

Vorteilhaft hat die fertige Rh(III)-Precursor-Lösung einen Rhodiumgehalt von 10 - 30 Gew.-%, oder 15-20 Gew.-% wobei sich diese Angabe auf das reine Rhodium bezieht. In der vorliegenden Erfindung bezieht sich der Begriff "reines Rhodium" ausschließlich auf Rhodium bzw. Rhodiumionen in einer Verbindung, wobei andere an der Verbindung beteiligte Elemente nicht berücksichtigt werden.

Das Mischen von PPh₃-Suspension und Rh(III)-chlorid-Precursor erfolgt über einen Zeitraum von 0,5 bis 3 Stunden, insbesondere von 0,5 bis 1 Stunde.

Dabei werden PPh₃-Suspension und Rh(III)-chlorid-Precursor im Verhältnis 4:1 bis 10:1 (mol/mol), oder4:1 bis 6:1, bezogen auf die Stoffmengen von PPh₃ und reinem Rhodium, miteinander gemischt. Das Mischen kann dabei kontinuierlich oder diskontinuierlich erfolgen. Unter kontinuierlichem Mischen wird dabei verstanden, dass PPh₃-Suspension und Rh(III)-chlorid-Precursor gleichzeitig über einen Zeitraum von 1 - 3 Stunden in ein Mischungsgefäß eingeleitet werden. Unter diskontinuierlichem Mischen wird verstanden, dass zuerst die eine Mischungskomponente vollständig vorgelegt wird und danach die Zugabe der anderen Mischungskomponente erfolgt.

In einer vorteilhaften Ausführungsform wird die PPh₃-Suspension vorgelegt und danach der Rh(III)-chlorid-Precursor zugegeben.

Bei allen oben aufgeführten kontinuierlichen und diskontinuierlichen Mischungsprozessen erfolgt das Mischen in einem inertisierten Reaktor.

Nach dem Mischen von PPh₃-Suspension und Rh(III)-chlorid-Precursor wird das entstandene Reaktionsgemisch gemäß Schritt c) des Verfahrens für 1,5 bis 3 Stunden, oder für 2 Stunden, am Rückfluss gerührt. Anschließend wird gemäß Schritt d) auf 35°C bis 50°C oder 40°C bis 50°C, insbesondere auf 45°C, abgekühlt. Dabei gilt wie bei Schritt a), dass bei einem Siedepunkt des Alkohols unter 85°C bis zu dessen Siedepunkt erhitzt und anschließend unter Rückfluss gerührt wird. Bei Alkoholen, deren Siedepunkte höher als 85°C liegen, wird auf eine Innentemperatur des Reaktionsgefäßes von 75°C bis 85°C erhitzt. Die Siedepunkte der oben genannten Alkohole sind dem Fachmann bekannt. Nach Erreichen des Siedetemperatur bzw. der Innentemperatur von 75°C bis 85°C wird für die angegebene Zeit bei dieser Temperatur gerührt.

Nach Durchführung von Schritt d) wird bei dieser Temperatur von 35°C bis 50°C anschließend gemäß Schritt e) eine alkoholische Alkalihydroxidlösung zugegeben. Dies kann über über einen Zeitraum von 0,5-3 Stunden, insbesondere 1 Stunde erfolgen. Geeignete Alkohole sind Methanol, Ethanol und 2-Propanol sowie Gemische davon, insbesondere Ethanol. Geeignete Alkalihydroxide sind NaOH und KOH, vorteilhaft ist KOH. Besonders vorteilhaft handelt es sich bei der alkoholischen Alkalihydroxidlösung um ethanolische Kalilauge, da die Löslichkeit von KOH in Ethanol hoch ist. Die Konzentration des Alkalihydroxids in der alkoholischen Lösung beträgt vorteilhaft 3,8 bis 6 mol/L, oder 4 bis 5 mol/L.

Vorteilhaft werden 7 bis 12 Äquivalente Alkalihydroxid pro Äquivalent an reinem Rhodium zugegeben. Dem Fachmann ist aufgrund seines Fachwissen ersichtlich, dass die erforderliche Menge an Alkalihydroxid vom Säuregehalt des Rhodium(III)-chlorid-Precursors abhängt: Je höher der Gehalt, desto mehr Alkalihydroxid ist erforderlich.

Nach beendeter Zugabe der alkoholischen Alkalihydroxidlösung wird die Reaktionsmischung gemäß Schritt f) bei 35°C bis 50°C nachgerührt. Dies kann über einen Zeitraum von für 1,5 bis 3 Stunden erfolgen.

Für die Herstellung der alkoholischen PPh₃-Suspension und der alkoholischen Alkalihydroxidlösung können dieselben oder unterschiedliche Alkohole verwendet werden. Es hat sich bewährt, wenn für die Herstellung beider alkoholischen Lösungen derselbe Alkohol verwendet wird. Wird der Rh(III)-chlorid-Precursor vor Zugabe zur PPh₃-Suspension in einem Alkohol gelöst, so wird auch hierfür vorteilhaft derselbe Alkohol verwendet wie für die Herstellung der PPh₃-Suspension und der alkoholischen Alkalihydroxidlösung.

Danach wird die Suspension mit Kohlenmonoxid begast. Die CO-Begasung kann bei Normaldruck oder unter Druck erfolgen. Im Falle einer Begasung unter Druck empfiehlt sich ein Druck von etwa 1 bar. Die Begasungszeit beträgt 2 bis 16 Stunden. Dem Fachmann ist aufgrund seines Fachwissen ersichtlich, dass die erforderliche Begasungszeit vom gewählten Druck abhängt: Je höher der Druck, desto kürzer ist die erforderliche Begasungszeit. Wird unter Normaldruck begast, so sind CO-Begasungszeiten von 8 bis 16 Stunden vorteilhaft. Bei Begasung bei einem Druck von etwa 1 bar ist eine Begasungszeit von 2 bis 4 Stunden ausreichend. Im Falle einer CO-Begasung unter Druck wird anschließend eine Druckentlastung durchgeführt.

Nach beendeter CO-Begasung wird das Reaktionsgefäß mit einem Inertgas CO-frei gespült. Geeignete Inertgase sind beispielsweise Argon und Stickstoff. Anschließend wird das Reaktionsprodukt RhH(CO)(PPh₃)₃ abgetrennt, gewaschen und getrocknet. Das Abtrennen erfolgt zweckmäßig durch Filtration, insbesondere Absaugen bei vermindertem Druck. Vorteilhaft wird in inerter Atmosphäre abgesaugt.

Vorteilhaft wird das Produkt anschließend mit einem Alkohol gewaschen, insbesondere mit Methanol, Ethanol, 2-Propanol oder einem Gemisch davon. Insbesondere wird für das Waschen derjenige Alkohol verwendet, der auch für das Herstellen der Lösungen von PPh₃ und alkoholische Alkalihydroxid-Lösung verwendet wurde. Wurde für das Herstellen der zwei genannten Lösungen mehr als ein Alkohol verwendet, beispielsweise Ethanol für PPh₃ und Methanol für das Alkalihydroxid, so ist es vorteilhaft, für das Waschen des Endproduktes Ethanol oder Methanol zu verwenden, aber keinen weiteren Alkohol wie beispielsweise 2-Propanol.

Zuletzt wird das Reaktionsprodukt RhH(CO)(PPh₃)₃ mit vollentsalztem Wasser (VE-Wasser) chloridfrei gewaschen.

Es kann also das Endprodukt, RhH(CO)(PPh₃)₃, mit einem Alkohol, Wasser oder deren Kombination gewaschen werden. Anschließend wird das Produkt getrocknet.

Mit Hilfe des Verfahrens kann Hydridocarbonyltris(triphenylphosphin)rhodium(I) in einem einstufigen Prozess mit hoher Raumausbeute hergestellt werden. Im Gegensatz zu den bisher bekannten Verfahren ist das neue Verfahren für die Herstellung von RhH(CO)(PPh₃)₃ im industriellen Maßstab geeignet, da keine schwerlöslichen Zwischenprodukte entstehen und die Zugabe der Substanzen langsam erfolgen kann, was eine Voraussetzung für eine Herstellung in großtechnischen Reaktionsbehältern ist.

### Ausführungsbeispiele

### Ausführungsbeispiel 1: Herstellung von Carbonylhydridotris(triphenylphosphin)rhodium(I) aus Rh-chlorid-Lösung in 10 L-Maßstab

Idealisierte Reaktionsgleichungen:

H₃[RhCl₆]*(H₂O)ₙ + 4 PPh₃ → RhCl(PPh₃)₃ + 5 HCl + OPPh₃

RhCl(PPh₃)₃ + KOH + CH₃CH₂OH + PPh₃ → RhH(PPh₃)₄ + KCl + CH₃CHO + H₂O

RhH(PPh₃)₄ + CO → RhH(CO)(PPh₃)₃ + PPh₃

Ein 10 L - Doppelmantelreaktor mit 2-Ebenen-Rührer, Rückflusskühler und einem Gaseinlass wird mit Schutzgas inertisiert. Bei einer Rührerdrehzahl von 150U/min werden 6 L Ethanol unter Rühren vorgelegt. Anschließend werden 1,2 kg (4,575 mol) Triphenylphosphin (mind. 99,5%, Hersteller: BASF) in den Reaktor überführt. Das PPh₃-Gebinde wird mit 50 ml Ethanol in den Reaktor ausgespült. Der Rührer wird auf 260 U/min eingestellt, das Kühlwasser aufgedreht und der Reaktor zum Rückfluss aufgeheizt. Die Mischung wird für 30 Minuten am Rückfluss gerührt. PPh₃ löst sich vollständig auf. Es erfolgt das Abkühlen der Lösung auf Tᵢₙₙₑₙ: 35°C, wobei das PPh₃ zum Teil als feines Pulver wieder ausfallen kann. Danach werden 105 g Rhodium (1,02 mol) in Form von ca. 525 g wässriger Rhodium(III)-chlorid-Lösung, (Umicore-Produkt-Nr. 68.2565.2720; Rh-Gehalt ca. 20 Gew.-%) zugegeben. Das Gebinde der Rhodium-chlorid-Lösung wird mit 100 ml Ethanol in den Reaktor ausgespült. Die Reaktionsmischung wird erneut zum Rückfluss (Tᵢₙₙₑₙ: 76-78°C) erhitzt und für 2 Stunden am Rückfluss gehalten. Es entsteht eine rote Suspension mit feinem Niederschlag.

Die Reaktionssuspension wird nach Ablauf der 2 Stunden auf Tᵢₙₙₑₙ: 45°C abgekühlt. Bei dieser Temperatur wird eine ethanolische Kalilauge-Lösung (10,3 Äq, 10,5 mol Kaliumhydroxid-Plätzchen entsprechend 591 g reines KOH in 2,2 L Ethanol gelöst) innerhalb 0,5 Stunden mittels Tropftrichter mit Gasausgleich zudosiert. Das KOH-EtOH-Gebinde und der Tropftrichter werden mit 0,5 L Ethanol in den Reaktor ausgespült. Die nun gelbe Suspension wird für 2 Stunden bei Tᵢₙₙₑₙ: 45°C gerührt. Danach wird CO-Gas bei Normaldruck über die Reaktionsmischung geleitet. Die Begasung wird für 8 bis 16 Stunden fortgeführt. Währenddessen wird der Reaktor auf Tᵢₙₙₑₙ: 20°C abgekühlt.

Nach der Umsetzung wird die CO-Begasung unterbrochen und der Reaktor mit Argon oder Stickstoff CO-frei gespült. Die gelbe Suspension wird inert auf D4-Glasfilternutschen abgelassen und trockengesaugt. Es folgt eine Suspensionswäsche mit 0,5 L Ethanol. Nach dem Absaugen des Ethanols unter vermindertem Druck wird der Filterkuchen mit Wasser (vollentsalzt, VE) chloridfrei gewaschen. Der Feststoff wird anschließend im Vakuumtrockenschrank bei 40°C bis zur Gewichtskonstanz getrocknet.

Man erhält ca. 927 g gelben, kristallinen Feststoff mit ca. 11,2% Rhodium. Dies entspricht einer metallbasierten Ausbeute von -99% und einer Raumausbeute von ca. 104 g/L.

Die Identität des Produktes RhH(CO)(PPh₃)₃ wird mittels ¹H- und ³¹P-NMR-Spektroskopie in Toluol sowie durch ein IR-Spektrum ermittelt. Die Reinheit wird mittels CHN-Elementaranalyse und quantitativer ³¹P-NMR-Analyse bestimmt. Die Bestimmung des Rhodium- und des Phosphorgehaltes erfolgt per ICP-OES. Der Gesamtchlorgehalt liegt bei unter 200 ppm (Chloranalyzer).

### Ausführungsbeispiel 2: Herstellung von Carbonylhydridotris(triphenylphosphin)rhodium(I) aus Rhodium(III)-chlorid-Hydrat

Idealisierte Reaktionsgleichungen:

RhCl₃*xH₂O + 4 PPh₃ → RhCl(PPh₃)₃ + 2 HCl + OPPh₃

RhCl(PPh₃)₃ + KOH + CH₃CH₂OH + PPh₃ → RhH(PPh₃)₄ + KCl + CH₃CHO + H₂O

RhH(PPh₃)₄ + CO → RhH(CO)(PPh₃)₃ + PPh₃

Ein 10 L - Doppelmantelreaktor mit 2-Ebenen-Rührer, Rückflusskühler und einem Gaseinlass wird mit Schutzgas inertisiert. Bei einer Rührerdrehzahl von 150U/min werden 6 L Ethanol unter Rühren vorgelegt. Anschließend werden 936 g (3,57 mol) Triphenylphosphin (mind. 99,5%, Hersteller: BASF) in den Reaktor überführt. Das PPh₃-Gebinde wird mit 50 ml Ethanol in den Reaktor ausgespült. Der Rührer wird auf 260 U/min eingestellt, das Kühlwasser aufgedreht und der Reaktor zum Rückfluss aufgeheizt. Die Mischung wird für 30 Minuten am Rückfluss gerührt. PPh₃ löst sich vollständig auf. Es erfolgt das Abkühlen der Lösung auf Tᵢₙₙₑₙ: 35°C, wobei das PPh₃ zum Teil als feines Pulver wieder ausfallen kann. Danach werden 85 g Rhodium (0,83 mol) in Form von ca. 224 g Rhodium(III)-chlorid-Hydrat (Umicore-Produkt-Nr. 68.2562.1138; Rh-Gehalt ca. 38 Gew.-%) zugegeben. Das Gebinde der Rhodium-chlorid-Lösung wird mit 50 ml Ethanol in den Reaktor ausgespült. Die Reaktionsmischung wird erneut zum Rückfluss (Tᵢₙₙₑₙ: 76-78°C) erhitzt und für 2 Stunden am Rückfluss gehalten. Es entsteht eine rote Suspension mit feinem Niederschlag. Die Reaktionssuspension wird nach Ablauf der 2 Stunden auf Tᵢₙₙₑₙ: 45°C abgekühlt und bei dieser Temperatur wird eine ethanolische Kalilauge-Lösung (8,3 Äq, 6,9 mol) Kaliumhydroxid-Plätzchen entsprechend 386 g reines KOH in 1,4 L Ethanol gelöst) langsam innerhalb 0,5 Stunden mittels Tropftrichter mit Gasausgleich zudosiert. Das KOH-EtOH-Gebinde und der Tropftrichter werden mit 1,4 L Ethanol in den Reaktor ausgespült. Die nun gelbe Suspension wird für 2 Stunden bei Tᵢₙₙₑₙ: 45°C gerührt. Danach wird CO-Gas bei Normaldruck über die Reaktionsmischung geleitet. Die Begasung wird für 8 bis 16 Stunden fortgeführt. Währenddessen wird der Reaktor auf Tᵢₙₙₑₙ: 20°C abgekühlt. Die Umsetzung mit CO kann auch unter Druck in einem Druckreaktor erfolgen. Hier empfiehlt sich ca. 1 bar (dauerhaft - es muss also nachgeregelt werden) für ca. 2-4h. Danach wird, nach einer Druckentlastung, ebenfalls wie folgt vorgegangen. Nach der Umsetzung wird die CO-Begasung unterbrochen und der Reaktor mit Argon oder Stickstoff CO-frei gespült. Die gelbe Suspension wird inert auf D4-Glasfilternutschen abgelassen und trockengesaugt. Es folgt eine Suspensionswäsche mit 0,5 L Ethanol. Nach dem Absaugen des Ethanols unter vermindertem Druck wird der Filterkuchen mit Wasser (vollentsalzt, VE) chlorid-frei gewaschen. Der Feststoff wird anschließend im Vakuumtrockenschrank bei 40°C bis zur Gewichtskonstanz getrocknet.

Man erhält ca. 754 g gelben, kristallinen Feststoff mit ca. 11,2% Rhodium. Dies entspricht einer metallbasierten Ausbeute von -99% und einer Raumausbeute von ca. 85 g/L.

Die Identität des Produktes RhH(CO)(PPh₃)₃ wird mittels ¹H- und ³¹P-NMR-Spektroskopie in Toluol sowie durch ein IR-Spektrum ermittelt. Die Reinheit wird mittels CHN-Elementaranalyse und quantitativer ³¹P-NMR-Analyse bestimmt. Die Bestimmung des Rhodium- und des Phosphorgehaltes erfolgt per ICP-OES. Der Gesamtchlorgehalt liegt bei unter 150 ppm (Chloranalyzer).

### Ausführungsbeispiel 3: Herstellung von Carbonylhydridotris(triphenylphosphin)rhodium(I) aus Rh-chlorid-Lösung in 1 L-Maßstab in Isopropanol (2-Propanol)

Idealisierte Reaktionsgleichungen:

H₃[RhCl₆]*(H₂O)ₙ + 4 PPh₃ → RhCl(PPh₃)₃ + 5 HCl + OPPh₃

RhCl(PPh₃)₃ + KOH + C₃H₇OH + PPh₃ → RhH(PPh₃)₄ + KCl + C₃H₆O + H₂O

RhH(PPh₃)₄ + CO → RhH(CO)(PPh₃)₃ + PPh₃

Ein 1 L - Doppelmantelreaktor mit 2-Ebenen-Rührer, Rückflusskühler und einem Gaseinlass wird mit Schutzgas inertisiert. Bei einer Rührerdrehzahl von 150U/min werden 650 mL Isopropanol unter Rühren vorgelegt. Anschließend werden 107 g (0,4 mol) Triphenylphosphin (mind. 99,5%, Hersteller: BASF) in den Reaktor überführt. Das PPh₃-Gebinde wird mit 5 ml Isopropanol in den Reaktor ausgespült. Der Rührer wird auf 260 U/min eingestellt, das Kühlwasser aufgedreht und der Reaktor zum Rückfluss aufgeheizt. Die Mischung wird für 30 Minuten am Rückfluss gerührt. PPh₃ löst sich vollständig auf. Es erfolgt das Abkühlen der Lösung auf Tᵢₙₙₑₙ: 35°C, wobei das PPh₃ zum Teil als feines Pulver wieder ausfällt. Danach werden 9,25 g Rhodium (0,090 mol) in Form von ca. 47 g wässriger Rhodium(III)-chlorid-Lösung, (Umicore-Produkt-Nr. 68.2565.2720; Rh-Gehalt ca. 20 Gew.-%) zugegeben. Das Gebinde der Rhodium-chlorid-Lösung wird mit 10 ml Isopropanol in den Reaktor ausgespült. Die Reaktionsmischung wird erneut zum Rückfluss (Tᵢₙₙₑₙ: 78,5°C) erhitzt und für 2 Stunden am Rückfluss gehalten. Es entsteht eine rote Suspension mit feinem Niederschlag.

Die Reaktionssuspension wird nach Ablauf der 2 Stunden auf Tᵢₙₙₑₙ: 45°C abgekühlt. Bei dieser Temperatur wird eine ethanolische Kalilauge-Lösung (10,3 Äq, 1,05 mol Kaliumhydroxid-Plätzchen entsprechend 52 g reines KOH in 230 mL Ethanol gelöst) innerhalb 0,5 Stunden mittels Tropftrichter mit Gasausgleich zudosiert. Das KOH-EtOH-Gebinde und der Tropftrichter werden mit 50 mL Ethanol in den Reaktor ausgespült. Die nun gelbe Suspension wird für 2 Stunden bei Tᵢₙₙₑₙ: 45°C gerührt. Danach wird CO-Gas bei Normaldruck über die Reaktionsmischung geleitet. Die Begasung wird für 8 bis 16 Stunden fortgeführt. Währenddessen wird der Reaktor auf Tᵢₙₙₑₙ: 20°C abgekühlt.

Nach der Umsetzung wird die CO-Begasung unterbrochen und der Reaktor mit Argon oder Stickstoff CO-frei gespült. Die gelbe Suspension wird inert auf D4-Glasfilternutschen abgelassen und trockengesaugt. Es folgt eine Suspensionswäsche mit 50 mL Ethanol. Nach dem Absaugen des Ethanols unter vermindertem Druck wird der Filterkuchen mit Wasser (vollentsalzt, VE) chloridfrei gewaschen. Der Feststoff wird anschließend im Vakuumtrockenschrank bei 40°C bis zur Gewichtskonstanz getrocknet.

Man erhält ca. 80 g gelben, kristallinen Feststoff mit ca. 11,2% Rhodium. Dies entspricht einer metallbasierten Ausbeute von ∼97% und einer Raum-Ausbeute von ca. 80 g/L.

Die Identität des Produktes RhH(CO)(PPh₃)₃ wird mittels ¹H- und ³¹P-NMR-Spektroskopie in Toluol sowie durch ein IR-Spektrum ermittelt. Die Reinheit wird mittels CHN-Elementaranalyse und quantitativer ³¹P-NMR-Analyse bestimmt. Die Bestimmung des Rhodium- und des Phosphorgehaltes erfolgt per ICP-OES. Der Gesamtchlorgehalt liegt bei unter 200 ppm (Chloranalyzer).

### Ausführungsbeispiel 4: Herstellung von Carbonylhydridotris(triphenylphosphin)rhodium(I) aus Rh-chlorid-Lösung in 1 L-Maßstab mit Begasung unter Druck

Idealisierte Reaktionsgleichungen:

H₃[RhCl₆]*(H₂O)ₙ + 4 PPh₃ → RhCl(PPh₃)₃ + 5 HCl + OPPh₃

RhCl(PPh₃)₃ + KOH + CH₃CH₂OH + PPh₃ → RhH(PPh₃)₄ + KCl + CH₃CHO + H₂O

RhH(PPh₃)₄ + CO → RhH(CO)(PPh₃)₃ + PPh₃

Ein 1 L - Doppelmanteldruckreaktor mit 2-Ebenen-Rührer, Rückflusskühler und einem Gaseinlass wird mit Schutzgas inertisiert. Bei einer Rührerdrehzahl von 150U/min werden 600 mL Ethanol unter Rühren vorgelegt. Anschließend werden 120 g (0,4575 mol) Triphenylphosphin (mind. 99,5%, Hersteller: BASF) in den Reaktor überführt. Das PPh₃-Gebinde wird mit 5 ml Ethanol in den Reaktor ausgespült. Der Rührer wird auf 260 U/min eingestellt, das Kühlwasser aufgedreht und der Reaktor zum Rückfluss aufgeheizt. Die Mischung wird für 30 Minuten am Rückfluss gerührt. PPh₃ löst sich vollständig auf. Es erfolgt das Abkühlen der Lösung auf Tᵢₙₙₑₙ: 35°C, wobei das PPh₃ zum Teil als feines Pulver wieder ausfallen kann. Danach werden 10,5 g Rhodium (0,102 mol) in Form von ca. 52,5 g wässriger Rhodium(III)-chlorid-Lösung, (Umicore-Produkt-Nr. 68.2565.2720; Rh-Gehalt ca. 20 Gew.-%) zugegeben. Das Gebinde der Rhodium-chlorid-Lösung wird mit 10 ml Ethanol in den Reaktor ausgespült. Die Reaktionsmischung wird erneut zum Rückfluss (Tᵢₙₙₑₙ: 76-78°C) erhitzt und für 2 Stunden am Rückfluss gehalten. Es entsteht eine rote Suspension mit feinem Niederschlag.

Die Reaktionssuspension wird nach Ablauf der 2 Stunden auf Tᵢₙₙₑₙ: 45°C abgekühlt. Bei dieser Temperatur wird eine ethanolische Kalilauge-Lösung (10,3 Äq, 1,05 mol Kaliumhydroxid-Plätzchen entsprechend 59,1 g reines KOH in 220 mL Ethanol gelöst) innerhalb 0,5 Stunden mittels Tropftrichter mit Gasausgleich zudosiert. Das KOH-EtOH-Gebinde und der Tropftrichter werden mit 50 mL Ethanol in den Reaktor ausgespült. Die nun gelbe Suspension wird für 2 Stunden bei Tᵢₙₙₑₙ: 45°C gerührt. Danach wird CO-Gas mit 1 bar Überdruck auf die Reaktion aufgedrückt. Der Druck wird durch Nachregeln von CO-Gas für 2-4 h bei 1 bar gehalten. Nach abgeschlossener Begasung (spätestens nach 4h) wird der Reaktor auf Tᵢₙₙₑₙ: 20°C abgekühlt. Die CO-Zufuhr wird unterbrochen und der Reaktor entlastet. Im Anschluss wird der Reaktor mit Argon oder Stickstoff CO-frei gespült.

Die gelbe Suspension wird inert auf D4-Glasfilternutschen abgelassen und trockengesaugt. Es folgt eine Suspensionswäsche mit 50 mL Ethanol. Nach dem Absaugen des Ethanols unter vermindertem Druck wird der Filterkuchen mit Wasser (vollentsalzt, VE) chloridfrei gewaschen. Der Feststoff wird anschließend im Vakuumtrockenschrank bei 40°C bis zur Gewichtskonstanz getrocknet.

Man erhält ca. 92,7 g gelben, kristallinen Feststoff mit ca. 11,2% Rhodium. Dies entspricht einer metallbasierten Ausbeute von ∼99% und einer Raum-Ausbeute von ca. 104 g/L.

Die Identität des Produktes RhH(CO)(PPh₃)₃ wird mittels ¹H- und ³¹P-NMR-Spektroskopie in Toluol sowie durch ein IR-Spektrum ermittelt. Die Reinheit wird mittels CHN-Elementaranalyse und quantitativer ³¹P-NMR-Analyse bestimmt. Die Bestimmung des Rhodium- und des Phosphorgehaltes erfolgt per ICP-OES. Der Gesamtchlorgehalt liegt bei unter 200 ppm (Chloranalyzer).

## Patentansprüche

1. Einstufiges Verfahren zur Herstellung von RhH(CO)(PPh₃)₃ umfassend die Schritte
a) Herstellen einer alkoholischen Suspension von Triphenylphosphin PPh₃ in einem inertisierten Reaktionsgefäß,
b) Mischen der alkoholischen PPh₃-Suspension mit einem Rh(III)-chlorid-Precursor bei einer Temperatur von 30 bis 40 °C,
c) Rühren des Reaktionsgemischs aus PPh₃-Suspension und Rh(III)-chlorid-Precursor bei erhöhter Temperatur,
- wobei unter Rückfluss gerührt wird, falls der Siedepunkt des Alkohols unter 85°C liegt, oder
- wobei bei einer Innentemperatur des Reaktionsgefäßes von 75°C bis 85°C gerührt wird, falls der Siedepunkt des Alkohols 85°C oder mehr beträgt,
d) Abkühlen der Suspension aus Schritt c) auf 35-50°C, insbesondere 40-50°C,
e) Zugabe einer alkoholischen Alkalihydroxidlösung
f) Rühren der Reaktionssuspension bei 35-50°C, insbesondere 40-50°C,
g) Begasung mit CO-Gas,
h) Abtrennen und optional Waschen und Trocknen des Hydridocarbonyltris(triphenylphosphin)rhodium(I)-Komplexes, RhH(CO)(PPh₃)₃.

2. Verfahren gemäß Anspruch 1, **dadurch gekennzeichnet, dass** der Rh(III)-chlorid Precursor ausgewählt ist aus Rhodium(III)-chlorid-Hydrat RhCl₃*xH₂O und Rhodium(III)-chlorid-Lösung H₃[RhCl₆]*(H₂O)ₙ, wässrigen und alkoholischen Lösungen von RhCl₃*xH₂O und H₃[RhCl₆]*(H₂O)ₙ sowie Gemischen davon.

3. Verfahren gemäß Anspruch 2, **dadurch gekennzeichnet, dass** der Alkohol zur Herstellung von alkoholischen Lösungen von RhCl₃*xH₂O und H₃[RhCl₆]*(H₂O)ₙ sowie von Gemischen aus wässrigen und alkoholischen Lösungen von RhCl₃*xH₂O und H₃[RhCl₆]*(H₂O)ₙ ausgewählt ist aus Methanol, Ethanol, n-Propanol und 2-Propanol sowie Gemischen dieser Alkohole.

4. Verfahren nach einem oder mehreren der Ansprüche 1 bis 3, wobei der Alkohol zur Herstellung der Lösungen von PPh₃ und der Alkalihydroxidlösung ausgewählt ist aus Methanol, Ethanol, n-Propanol, 2-Propanol und Gemischen davon.

5. Verfahren nach einem oder mehreren der Ansprüche 1 bis 4, wobei das Alkalihydroxid Kaliumhydroxid ist.

6. Verfahren nach einem oder mehreren der Ansprüche 1 bis 5, wobei das Mischen von PPh₃-Suspension und Rh(III)-chlorid-Precursorlösung gemäß Schritt b) diskontinuierlich erfolgt, wobei die PPh₃-Suspension vorgelegt und dann die Rh(III)-chlorid-Precursorlösung zugegeben wird.

7. Verfahren nach einem oder mehreren der Ansprüche 1 bis 6, wobei die Begasung mit CO-Gas unter Normdruck erfolgt.

8. Verfahren nach einem oder mehreren der Ansprüche 1 bis 7, wobei Schritt c), das Rühren des Reaktionsgemisches aus PPh₃-Suspension und Rh(III)-chlorid-Precursor bei erhöhter Temperatur, für eine Zeit von 1,5 bis 3 Stunden durchgeführt wird.

9. Verfahren nach einem oder mehreren der Ansprüche 1 bis 8, wobei Schritt f), das Rühren der Reaktionssuspension bei 40-50°C, für 1,5 bis 3 Stunden durchgeführt wird.

10. Verfahren nach einem oder mehreren der Ansprüche 1 bis 9, wobei Schritt g), die Begasung mit CO-Gas, für eine Dauer von 2 bis 16 Stunden durchgeführt wird.

11. Verfahren nach einem oder mehreren der Ansprüche 1 bis 10, wobei in Schritt h) das Endprodukt, RhH(CO)(PPh₃)₃, mit einem Alkohol, Wasser oder deren Kombination gewaschen wird.

12. Verfahren nach einem oder mehreren der Ansprüche 1 bis 10, wobei der Alkohol zur Herstellung der alkoholischen Suspension von Triphenylphosphin PPh₃ ausgewählt ist aus Methanol, Ethanol, n-Propanol und 2-Propanol sowie Gemischen dieser Alkohole.

## Claims

1. One-stage process for preparing RhH(CO)(PPh₃)₃, comprising the steps:
(a) Preparation of an alcoholic suspension of triphenylphosphine PPh₃ in an inerted reaction vessel,
(b) Mixing the alcoholic PPh₃ suspension with an Rh(III) chloride precursor at a temperature of 30 to 40 °C,
(c) Stirring the reaction mixture of PPh₃ suspension and Rh(III) chloride precursor at an elevated temperature,
- wherein stirring is carried out under reflux if the boiling point of the alcohol is below 85 °C, or
- wherein, at an internal temperature of the reaction vessel of 75 °C to 85 °C, stirring is carried out if the boiling point of the alcohol is 85 °C or higher,
(d) Cooling the suspension from step (c) to 35-50 °C - in particular, 40-50 °C,
(e) Adding an alcoholic alkali hydroxide solution,
(f) Stirring the reaction suspension at 35-50 °C - in particular, 40-50 °C,
(g) Sparging with CO gas,
(h) Separating and, optionally, washing and drying the hydridocarbonyltris(triphenylphosphine)rhodium(I) complex, RhH(CO)(PPh₃)₃.

2. Process according to claim 1 **characterized in that** the Rh(III) chloride precursor is selected from rhodium(III) chloride hydrate, RhCl₃*xH₂O, and rhodium(III) chloride solution, H₃[RhCl₆]*(H₂O)ₙ, aqueous and alcoholic solutions of RhCl₃*xH₂O and H₃[RhCl₆]*(H₂O)ₙ, as well as mixtures thereof.

3. Process according to claim 2 **characterized in that** the alcohol for producing alcoholic solutions of RhCl₃*xH₂O and H₃[RhCl₆]*(H₂O)ₙ, as well as mixtures of aqueous and alcoholic solutions of RhCl₃*xH₂O and H₃[RhCl₆]*(H₂O)ₙ, is selected from methanol, ethanol, n-propanol, and 2-propanol, as well as mixtures of these alcohols.

4. Process according to one or more of claims 1 through 3, wherein the alcohol for preparing the solutions of PPh₃ and the alkali hydroxide solution is selected from methanol, ethanol, n-propanol, 2-propanol, and mixtures thereof.

5. Process according to one or more of claims 1 through 4, wherein the alkali hydroxide is potassium hydroxide.

6. Process according to one or more of claims 1 through 5, wherein the mixture of PPh₃ suspension and the Rh(III) chloride precursor solution according to step (b) occurs discontinuously, wherein the PPh₃ suspension is introduced, and then the Rh(III) chloride precursor solution is added.

7. Process according to one or more of claims 1 through 6, wherein the sparging with CO gas occurs under standard pressure.

8. Process according to one or more of claims 1 through 7, wherein step (c) - the stirring of the reaction mixture of PPh₃ suspension and Rh(III) chloride precursor at elevated temperature - is carried out for a period of 1.5 to 3 hours.

9. Process according to one or more of claims 1 through 8, wherein step (f) - the stirring of the reaction suspension at a temperature of 40-50 °C -, is carried out for 1.5 to 3 hours.

10. Process according to one or more of claims 1 through 9, wherein step (g) - the sparging with CO gas - is carried out for a period of 2 to 16 hours.

11. Process according to one or more of claims 1 through 10, wherein, in step (h), the end product, RhH(CO)(PPh₃)₃, is washed with an alcohol, water, or a combination thereof.

12. Process according to one or more of claims 1 through 10, wherein the alcohol for preparing the alcoholic suspension of triphenylphosphine PPh₃ is selected from methanol, ethanol, n-propanol, and 2-propanol, as well as mixtures of these alcohols.

## Revendications

1. Procédé à une étape pour la préparation de RhH(CO)(PPh₃)₃ comprenant les étapes de
a) préparation d'une suspension alcoolique de triphénylphosphine PPh₃ dans un récipient de réaction rendu inerte,
b) mélange de la suspension alcoolique de PPh₃ avec un précurseur de chlorure de Rh(III) à une température de 30 à 40 °C,
c) agitation du mélange réactionnel constitué par la suspension de PPh₃ et le précurseur de chlorure de Rh(III) à température augmentée,
- l'agitation ayant lieu à reflux, si le point d'ébullition de l'alcool est inférieur à 85 °C ou
- l'agitation ayant lieu à une température interne du récipient de réaction de 75 °C à 85 °C si le point d'ébullition de l'alcool est de 85 °C ou plus,
d) refroidissement de la suspension de l'étape c) à 35-50 °C, en particulier à 40-50 °C,
e) addition d'une solution alcoolique d'hydroxyde de métal alcalin
f) agitation de la suspension réactionnelle à 35-50 °C, en particulier à 40-50 °C,
g) introduction de CO gazeux,
h) séparation et lavage et séchage facultatifs du complexe d'hydridocarbonyl-tris(triphénylphosphine)-rhodium(I), RhH(CO)(PPh₃)₃.

2. Procédé selon la revendication 1, **caractérisé en ce que** le précurseur de chlorure de Rh(III) est choisi parmi le chlorure de rhodium(IlI) hydraté RhCl₃*xH₂O et une solution de chlorure de rhodium(III) H₃[RhCl₆]*(H₂O)ₙ, les solutions aqueuses et alcooliques de RhCl₃*xH₂O et de H₃[RhCl₆]*(H₂O)ₙ ainsi que leurs mélanges.

3. Procédé selon la revendication 2, **caractérisé en ce que** l'alcool pour la préparation de solutions alcooliques de RhCl₃*xH₂O et de H₃[RhCl₆]*(H₂O)ₙ ainsi que de mélanges de solutions aqueuses et alcooliques de RhCl₃*xH₂O et de H₃[RhCl₆]*(H₂O)ₙ est choisi parmi le méthanol, l'éthanol, le n-propanol et le 2-propanol ainsi que les mélanges de ces alcools.

4. Procédé selon l'une ou plusieurs des revendications 1 à 3, l'alcool pour la préparation des solutions de PPh₃ et de la solution d'hydroxyde de métal alcalin étant choisi parmi le méthanol, l'éthanol, le n-propanol, le 2-propanol et leurs mélanges.

5. Procédé selon l'une ou plusieurs des revendications 1 à 4, l'hydroxyde de métal alcalin étant l'hydroxyde de potassium.

6. Procédé selon l'une ou plusieurs des revendications 1 à 5, le mélange de la suspension de PPh₃ et de la solution de précurseur de chlorure de Rh(III) selon l'étape b) étant réalisé de manière discontinue, la suspension de PPh₃ étant disposée au préalable et la solution de précurseur de chlorure de Rh(III) étant ajoutée ensuite.

7. Procédé selon l'une ou plusieurs des revendications 1 à 6, l'introduction de CO gazeux étant réalisée sous pression normale.

8. Procédé selon l'une ou plusieurs des revendications 1 à 7, l'étape c), l'agitation du mélange réactionnel constitué par la suspension de PPh₃ et le précurseur de chlorure de Rh(III) étant réalisée à température augmentée pendant une durée de 1,5 à 3 heures.

9. Procédé selon l'une ou plusieurs des revendications 1 à 8, l'étape f), l'agitation de la suspension réactionnelle, étant réalisée à 40-50 °C pendant 1,5 à 3 heures.

10. Procédé selon l'une ou plusieurs des revendications 1 à 9, l'étape g), l'introduction de CO gazeux, étant réalisée pendant une durée de 2 à 16 heures.

11. Procédé selon l'une ou plusieurs des revendications 1 à 10, le produit fini, RhH(CO)(PPh₃)₃, dans l'étape h) étant lavé avec un alcool, de l'eau ou leur combinaison.

12. Procédé selon l'une ou plusieurs des revendications 1 à 10, l'alcool pour la préparation de la suspension alcoolique de triphénylphosphine PPh₃ étant choisi parmi le méthanol, l'éthanol, le n-propanol, le 2-propanol et les mélanges de ces alcools.
